# EUROPEAN PATENT APPLICATION

(11) **EP 2 624 441 A2**
(43) Date of publication of application: **07.08.2013**
(21) Application number: 13153322.6
(22) Date of filing: 30.01.2013
(51) Int. Cl.: H02P 9/00

(54) **Integrated high-voltage direct current electric power generating system**

(30) Priority: 31.01.2012 US 201213362507
(71) Applicant: Hamilton Sundstrand Corporation, Windsor Locks, CT 06096-1010 (US)
(72) Inventor: Rozman, Gregory I., Rockford, IL 61114 (US); Gieras, Jacek F., Glastonbury, CT 06033 (US); Moss, Steven J., Rockford, IL 61114 (US)
(74) Representative: Tomlinson, Kerry John

(57) **Abstract**

An integrated high-voltage direct electric power generating system (10) comprises a permanent magnet generator (PMG) (14) including a PMG stator (16) and a PMG rotor (14a), wherein the PMG is disposed within a PMG housing (20). Also included is an armature winding (25) operably connected to the PMG and a first rectifier (18) for converting high-voltage AC from the armature winding to DC, wherein the armature winding is in communication with a first boost inductor (22), wherein the armature winding (25), the first rectifier (18) and the first boost inductor (22) are each disposed within the PMG housing (20). The armature winding (25) is operably connected to a second rectifier (19) for converting high-voltage AC from the armature winding to DC, wherein the armature winding is in communication with a second boost inductor (24), wherein the armature winding (25), the second rectifier (19) and the second boost inductor (24) are each disposed within the PMG housing (20).

## Description

### BACKGROUND OF THE INVENTION

The present invention relates to power generation systems, and more particularly to a high-voltage direct current (HVDC) power generation system.

HVDC power generating systems often employ a permanent magnet generator (PMG) that is coupled with an active rectifier. Typical topology of such a system utilizes PMG stator self-inductance as a boost inductor, and a position sensor, such as a resolver, is used for active rectifier switch commutation. The active rectifier often is a stand-alone line replaceable unit (LRU) connected to the PMG via a three-phase power cable, as well as with a resolver cable. An active rectifier of this configuration leads to increased size of the overall system and may be prone to reliability issues. Additionally, although the resolver-based position sensor used for active rectifier switch commutation is effective, such a component also may provide reliability concerns.

### BRIEF DESCRIPTION OF THE INVENTION

According to one embodiment, an integrated high-voltage direct current (HVDC) electric power generating system (EPGS) comprises a permanent magnet generator (PMG) including a PMG stator and a PMG rotor, wherein the PMG is disposed within a PMG housing. Also included is an armature winding operably connected to the PMG and a first rectifier for converting high-voltage AC from the armature winding, wherein the armature winding is in communication with a first boost inductor, wherein the armature winding, the first rectifier and the first boost inductor are each disposed within the PMG housing. The armature winding is operably connected to a second rectifier for converting high-voltage AC from the armature winding, wherein the armature winding is in communication with a second boost inductor, wherein the armature winding, the second rectifier and the second boost inductor are disposed within the PMG housing.

According to another embodiment, a method of generating high-voltage direct current (HVDC) electrical power includes an armature winding operably connected to a first rectifier and to a second rectifier, wherein the PMG, the armature winding, the first rectifier and the second rectifier are disposed within the PMG housing. Also included is extending the armature winding to form a first boost inductor, wherein the first boost inductor is disposed within the PMG housing. Further included is extending the armature winding to form a second boost inductor, wherein the second boost inductor is disposed within the PMG housing. Yet further included is controlling the first rectifier and the second rectifier with a rectifier controller.

### BRIEF DESCRIPTION OF THE DRAWINGS

The subject matter which is regarded as the invention is particularly pointed out and distinctly claimed in the claims at the conclusion of the specification. The foregoing and other features and advantages of the invention are apparent from the following detailed description taken in conjunction with the accompanying drawings in which:

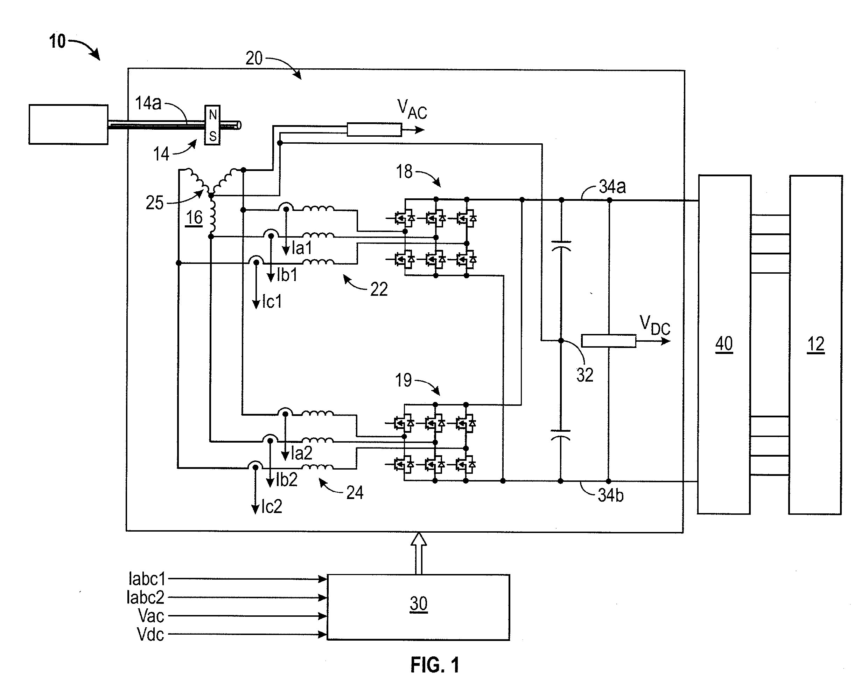

FIG. 1 schematically illustrates an integrated high-voltage direct current (HVDC) electric power generating system (EPGS).

### DETAILED DESCRIPTION OF THE INVENTION

Referring to FIG. 1, an electric power generating system (EPGS) is schematically illustrated and generally referred to with reference numeral 10. The EPGS 10 is operably connected to at least one load 12 that is to be driven by the EPGS 10. The at least one load 12 may be components or systems associated with numerous applications, with one such application including, but not being limited to, vehicles, such as military ground vehicles.

The EPGS 10 is an integrated high-voltage direct current (HVDC) system and comprises a permanent magnet generator (PMG) 14 that includes a PMG stator 16 and a PMG rotor 14a The PMG stator 16 includes an armature winding 25. The EPGS 10 also includes a first rectifier 18 and a second rectifier 19. The PMG 14, the PMG armature winding 25, the first rectifier 18 and the second rectifier 19 are all disposed within a PMG housing 20. Also disposed within the PMG housing 20 is a plurality of boost inductors, such as a first boost inductor 22 and a second boost inductor 24, with both the first boost inductor 22 and the second boost inductor 24 forming extended portions of the PMG armature winding 25. Either or both of the first boost inductor 22 and the second boost inductor 24 may be a three-phase inductor, however, this is merely illustrative of the specific inductor that may be employed.

A magnetic flux is provided by the permanent magnet portion and interacts with the PMG armature winding 25 to generate a back-emf voltage in the PMG armature winding 25. The magnitude of the AC output of the PMG armature winding 25 depends on the rotational speed of the permanent magnets and is therefore unregulated. The first rectifier 18 and the second rectifier 19 rectify the AC output and provide a DC output. A generator neutral provides a common node 32 that is accessible by a controller 30 that is disposed at a location external to the PMG housing 20, which is in operable communication with the EPGS 10, and is configured to detect a position of the PMG rotor based on the voltage reading taken at the common node 32, as well as at one of the phases of the armature winding 25. The detection of the PMG rotor position is achieved by employing a phase-locked-loop technique, as is known in the art. The implementation of the controller 30 can be in stationary or in rotating reference frames and may follow a current reference signal. To achieve interleaved operation, the carrier signals are phase shifted from each other by one-half (1/2) of the switching period of a triangular waveform used to generate a sine-triangle pulse-width modulation (PWM) pattern. The magnitude of the current reference magnitude is a function of DC bus voltage and derived on the output of a PI-based voltage regulator embedded within controller 30.

In the illustrated embodiment, there is a first active rectifier 18 and a second active rectifier 19, each including a plurality of silicon carbon (SiC) MOSFETs. As described above, the output of each of the first set of boost inductors 22 and the second set of boost inductors 24 is connected to the first active rectifier 18 and the second active rectifier 19, respectively. Positive DC outputs of the first rectifier 18 and the second rectifier 19 are connected together to form a DC bus positive rail 34a. Negative outputs of the first rectifier 18 and the second rectifier 19 are connected together to form a DC bus negative rail 34b. Both positive and negative DC bus rails 34a, 34b are connected to the DC load 12 via power management and distribution unit (PMAD) 40. The PMAD 40 may interrupt power flow to the load 12, disconnecting positive, or both positive and negative rails 34a, 34b from the load 12.

In one embodiment, the first rectifier 18 and the second rectifier 19 are interleaved bidirectional active rectifiers. The interleaved configuration of the first rectifier 18 and the second rectifier 19 results in a relatively low DC bus ripple and increased equivalent switching frequency. This results in improved power quality, reduction of switching losses and a smaller DC bus capacitance.

The EPGS 10 includes a power management and distribution (PMAD) system 40 that is in operable communication with the at least one load 12 that is to be driven by the EPGS 10 and is disposed at a location external to the PMG housing 20. The PMAD system 40 is configured to ensure the reliable delivery of electrical power to the at least one load 12 and is also in operable communication with the controller 30. The PMAD system 40 selectively distributes the rectified DC output that is rectified by the first rectifier 18 and the second rectifier 19 and is capable of switching such a rectified DC output on and off, with respect to the at least one load 12. The PMAD system 40 functions to match the output voltage provided by the first rectifier 18 and the second rectifier 19 with the specific DC voltage demands of the at least one load 12.

The above-described system reduces the weight of the EPGS system 10, in comparison to such systems that rely on a resolver to serve as the PMG rotor position sensor and to effectively provide active rectifier switch commutation. The EPGS system 10 achieves such functionality with preferably SiC MOSFET, interleaved bidirectional rectifiers 18, 19, as well as a first boost inductor 22 and a second boost inductor 24, with the active rectifiers 18, 19, the first boost inductor 22 and the second boost inductor 24 all being disposed within the PMG housing 20. Location of SiC MOSFETs, capable of wide temperature operation, within the PMG housing 20 allows sharing of a common cooling loop and enables construction of the integrated DC electric power generating system 10.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. An integrated high-voltage direct current (HVDC) electric power generating system (EPGS) comprising:
a permanent magnet generator (PMG) including a PMG rotor and a PMG stator having an armature winding, wherein the PMG is disposed within a PMG housing;
a first rectifier coupled to the armature winding via a first boost inductor for converting high-voltage AC from the armature winding to DC, wherein the armature winding, the first rectifier and the first boost inductor are each disposed within the PMG housing; and
a second rectifier coupled to the armature winding via a second boost inductor for converting high-voltage AC from the armature winding to DC, wherein the armature winding, the second rectifier and the second boost inductor are each disposed within the PMG housing.

2. The integrated HVDC EPGS of claim 1, further comprising a common node connected to a neutral of the armature winding and wherein a rectifier controller is configured to measure a voltage at the common node to detect a position of the PMG rotor.

3. The integrated HVDC EPGS of claim 1 or 2, wherein the first boost inductor and the second boost inductor are a three-phase inductors.

4. The integrated HVDC EPGS of claim 1, 2 or 3, wherein the first rectifier and the second rectifier form an interleaved bidirectional active rectifier by phase shifting carrier signals from each other by one-half of a switching period.

5. The integrated HVDC EPGS of claim 4, wherein each of the first rectifier and the second rectifier comprises a plurality of silicon carbon (SiC) MOSFETs.

6. The integrated HVDC EPGS of any preceding claim, further comprising a power management and distribution (PMAD) system disposed at a location external to the PMG housing.

7. The integrated HVDC EPGS of claim 6, further comprising at least one load to be powered by the integrated HVDC EPGS, wherein the PMAD system selectively distributes power to the at least one load.

8. The integrated HVDC EPGS of claim 6 or 7, wherein the PMAD system is in operable connection with a rectifier controller, the rectifier controller being disposed at a location external to the PMG housing.

9. A method of generating high-voltage direct current (HVDC) electrical power comprising:
inducing an AC voltage in an armature winding of a permanent magnet generator (PMG), wherein the armature winding is operably connected to a first rectifier and a second rectifier, wherein the PMG, the armature winding, the first rectifier and the second rectifier are disposed within a PMG housing;
extending the armature winding to form a first boost inductor coupled to the first rectifier, wherein the first boost inductor is disposed within the PMG housing;
extending the armature winding to form a second boost inductor coupled to the second rectifier, wherein the second boost inductor is disposed within the PMG housing; and
controlling the first rectifier and the second rectifier with a rectifier controller.

10. The method of claim 9, wherein a neutral of the armature winding shares a common node and further comprising measuring a voltage at the common node to detect a position of the PMG rotor.

11. The method of claim 9 or 10, wherein the first boost inductor and the second boost inductor are three-phase inductors.

12. The method of claim 9, 10 or 11, wherein the first rectifier and the second rectifier are controlled to form an interleaved bidirectional active rectifier by phase shifting carrier signals from each other by one-half of a switching period; preferably wherein each of the first rectifier and the second rectifier comprises a plurality of silicon carbon (SiC) MOSFETs.

13. The method of claim 9, 10, 11 or 12, further comprising selectively distributing power to at least one load to be powered by the integrated HVDC EPGS with a power management and distribution (PMAD) system.

14. The method of claim 13, wherein the PMAD system is disposed at a location external to the PMG housing.

15. The method of claim 13 or 14, wherein the PMAD system is in operable connection with the rectifier controller, the rectifier controller being disposed at a location external to the PMG housing.
